# FASCICULE DE BREVET EUROPEEN

(11) **EP 2 928 706 B1**
(45) Date de publication et mention de la délivrance du brevet: **22.02.2017**
(21) Numéro de dépôt: 13798678.2
(22) Date de dépôt: 02.12.2013
(51) Int. Cl.: B60C 11/00, B60C 19/08, B60C 1/00

(54) **PNEUMATIQUE COMPORTANT UNE BANDE DE ROULEMENT CONSTITUEE DE PLUSIEURS MELANGES ELASTOMERIQUES**
REIFEN MIT EINER LAUFFLÄCHE AUS MEHREREN ELASTOMERVERBINDUNGEN
TYRE COMPRISING A TREAD MADE UP OF SEVERAL ELASTOMERIC COMPOUNDS

(30) Priorité: 10.12.2012 FR 1261832
(43) Date de publication de la demande: 14.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: GAYTON, Christophe, F-63040 Clermont-Ferrand Cedex 9 (FR); MARTIN, Vincent, F-63040 Clermont-Ferrand Cedex 9 (FR)
(74) Mandataire: Le Cam, Stéphane Georges Elie
(86) Numéro de dépôt international: PCT/EP2013/075246
(87) Numéro de publication internationale: WO 2014/090620

(56) Documents cités:
- EP-A1- 0 594 045
- EP-A1- 2 457 743
- DE-A1- 19 731 525
- JP-A- 2005 075 201

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuelle de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Il est encore connu de modifier la couche interne de telles bandes de roulement pour lutter contre les usures irrégulières de ladite bande de roulement apparaissant notamment après usure de la première couche formant la surface extérieure de la bande de roulement du pneumatique neuf. De telles couches internes de la bande de roulement peuvent ainsi comporter des parties axialement extérieures constituées de matériaux plus rigides. De tels pneumatiques sont par exemple décrits dans les demandes de brevet JP 2007-196864 et JP 2009-286317.

Il s'avère toutefois que de telles bandes de roulement sont moins favorables aux propriétés hystérétiques du pneumatique et donc aux propriétés d'endurance et de résistance au roulement.

En outre, le choix de certains mélanges élastomériques conduit à des problèmes d'évacuation des charges électrostatiques qui s'accumulent sur les véhicules. Il est en effet important pour des raisons de confort, de bon fonctionnement de certains dispositifs embarqués, voire de sécurité notamment dans les stations-service, de pouvoir évacuer les charges électrostatiques accumulées au travers des pneumatiques et plus spécifiquement de leurs bandes de roulement qui viennent au contact du sol.

Le brevet DE 197 31 525 montre un pneumatique présentant les caractéristiques du préambule de la revendication 1.

Les inventeurs se sont ainsi donnés pour mission d'être en mesure de fournir des pneumatiques autorisant différents compromis de performances d'usure et/ou d'endurance et/ou de résistance au roulement, la capacité d'évacuation des charges électrostatiques au travers du pneumatique étant conservée.

Ce but a été atteint selon l'invention par un pneumatique, à armature de carcasse radiale, comprenant une armature de sommet, elle-même coiffée radialement d'une bande de roulement dont la sculpture comporte au moins deux rainures circonférentielles, réunie à deux bourrelets par l'intermédiaire de deux flancs, ladite bande de roulement étant constituée d'au moins trois couches de mélanges élastomériques radialement superposées, une première couche formant la partie radialement extérieure de la bande de roulement étant constituée d'au moins un premier mélange élastomérique présentant une résistivité électrique volumique ρ₁ telle que log(ρ₁) est inférieur à 6, une deuxième couche de mélanges élastomériques radialement intérieure et au contact de la dite première couche de mélange élastomérique étant constituée d'au moins trois parties, au moins les parties axialement extérieures, de ladite deuxième couche, étant constituées d'un deuxième mélange élastomérique présentant une résistivité électrique volumique ρ₂ telle que log(ρ₂) est supérieur à 8, au moins une partie de ladite deuxième couche, prolongeant radialement ledit au moins premier mélange élastomérique de ladite première couche, étant constituée d'un troisième mélange élastomérique présentant une résistivité électrique volumique ρ₃ telle que log(ρ₃) est inférieur à 6, une troisième couche de mélanges élastomériques radialement la plus intérieure étant constituée d'au moins cinq parties, au moins les parties axialement extérieures, de ladite troisième couche, étant constituées d'un quatrième mélange élastomérique présentant une valeur maximale de tan(δ), noté tan(δ)max, inférieure à 0.080, au moins deux parties de ladite troisième couche, axialement au contact d'au moins une partie axialement extérieure étant constituées du deuxième mélange élastomérique, et au moins une partie, de ladite troisième couche, prolongeant radialement ladite au moins une partie de ladite deuxième couche constituée du troisième mélange élastomérique, étant constituée dudit troisième mélange élastomérique.

Au sens de l'invention, des rainures circonférentielles peuvent être continues ou discontinues. De telles rainures peuvent encore être continues, certaines parties seulement étant débouchantes en surface de la bande de roulement du pneumatique neuf et donc d'apparence discontinues en surface de la bande de roulement du pneumatique neuf, puis réellement discontinues après usure partielle de la bande de roulement ; de telles rainures sont par exemples décrites dans la demande de brevet WO 2011/039194.

La résistivité électrique volumique est mesurée en statique selon la norme ASTM D 257.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre d'une éprouvette constituée de deux pastilles cylindriques de 2 mm d'épaisseur chacune et d'un centimètre de diamètre (l'éprouvette est réalisée à partir de prélèvements sur pneumatique réalisé à mi-hauteur de la couche concernée au plus près de la zone du plan équatorial dans une zone d'épaisseur suffisante pour constituer l'éprouvette), soumis à une sollicitation sinusoïdale en cisaillement simple alterné, à la fréquence de 10Hz, à une température de 60°C. On effectue un balayage en amplitude de déformation de 0,1 à 50% crête-crête (cycle aller), puis de 50% à 1% crête-crête (cycle retour). Les résultats exploités sont le module complexe de cisaillement dynamique (G*) et le facteur de perte tan(δ). Pour le cycle aller, on indique la valeur maximale de tan(δ) observée, noté tan(δ)ₘₐₓ.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan(δ) des matériaux utilisés sont mesurées à 10Hz entre 30 et 100°C pour intégrer l'effet des différentes fréquences de déformation induites par la révolution du pneumatique. La valeur de tan(δ) à 60°C correspond ainsi à un indicateur de la résistance au roulement du pneumatique en roulage.

Selon une première variante de réalisation de l'invention, la première couche formant la partie radialement extérieure de la bande de roulement est constituée du premier mélange élastomérique présentant une résistivité électrique volumique ρ₁ telle que log(ρ₁) est inférieur à 6.

Selon d'autres variantes, la première couche formant la partie radialement extérieure de la bande de roulement peut être constituée de plusieurs mélanges élastomériques, certains pouvant présenter une résistivité électrique volumique ρ telle que log(p) est supérieur 6 et de préférence supérieur à 8.

Les inventeurs ont tout d'abord su mettre en évidence que la présence du premier mélange élastomérique présentant une résistivité électrique volumique ρ₁ telle que log(ρ₁) inférieur à 6, comme matériau de la bande de roulement venant au contact du sol ainsi que la présence du troisième mélange élastomérique présentant une résistivité électrique volumique ρ₃ telle que log(ρ₃) inférieur à 6, localement dans la deuxième couche et dans la troisième couche telles que décrites précédemment permettent de conduire à un compromis entre les propriétés liées à la nature des deuxième et quatrième mélanges élastomériques et l'assurance de permettre l'évacuation des charges électrostatiques.

Le quatrième mélange constituant au moins les parties axialement extérieures de la troisième couche radialement la plus intérieure est particulièrement favorable pour les performances en termes de résistance au roulement. Au vu des performances en termes de résistivité électrique volumique des mélanges usuels montrant de bonnes performances en résistance au roulement, les inventeurs ont mis en évidence l'intérêt de prolonger radialement vers l'intérieur au sein de la troisième couche, les parties de la deuxième couche constituées du troisième mélange élastomérique pour assurer la conduction des charges électrostatiques depuis l'armature de sommet vers la surface de la bande de roulement venant au contact du sol.

Les inventeurs ont encore su mettre en évidence l'intérêt d'une troisième couche comportant au moins deux parties constituées du deuxième mélange élastomérique. En effet, le quatrième mélange élastomérique présentant une valeur maximale de tan(δ), noté tan(δ)max, inférieure à 0.080 est, comme énoncé précédemment, favorable pour les performances en termes de résistance au roulement mais le plus souvent au détriment des performances de type usure.

La présence du quatrième mélange peut ainsi par exemple être avantageusement limitée à des parties de la troisième couche de la bande de roulement du pneumatique qui ne sont pas directement sollicitées en termes d'usure, tout au long de la durée de vie du pneumatique.

Selon un mode de réalisation préférée de l'invention, la distance entre un point de la paroi formant une rainure et le quatrième mélange élastomérique est supérieure à 1 mm.

Le quatrième mélange élastomérique déterminé pour ses propriétés hystérétiques est usuellement peu cohésif. Ce mode de réalisation préféré de l'invention va ainsi permettre notamment de limiter la propagation de fissuration dans les fonds de rainures qui sont propices à l'initiation de telles fissures du fait de la présence possible de cailloux.

De préférence également selon l'invention, lesdites au moins deux parties de ladite troisième couche constituées du deuxième mélange élastomérique sont axialement centrées sur un plan circonférentiel passant par une desdites au moins deux rainures circonférentielles.

La présence du deuxième mélange élastomérique va ainsi notamment permettre de maintenir la distance minimum précédemment évoquée de 1 millimètre. Ce deuxième mélange élastomérique peut ainsi présenter des compromis de performances en termes de cohésion, usure et hystérèse qui permettent notamment de limiter la propagation de fissures et en assurant par exemple des performances intermédiaires en termes d'usure et de résistance au roulement entre les premier et quatrième mélanges élastomériques.

Selon de telles réalisations, il est en outre possible d'effectuer un recreusage de la sculpture avant d'envisager un rechapage sans risque de voir apparaître en surface de la bande de roulement le quatrième mélange élastomérique.

Selon une première variante de l'invention, la sculpture comportant un nombre pair de rainures circonférentielles, la deuxième couche comporte un nombre impair de parties constituées du troisième mélange élastomérique.

Selon cette première variante de réalisation de l'invention, le ou les chemins de conduction constitués par le premier mélange élastomérique et le troisième mélange élastomérique depuis l'armature de sommet au travers des trois couches est ou sont avantageusement positionnés entre les rainures de sorte que ce chemin arrive assurément jusqu'à la surface de la bande de roulement venant au contact du sol. Les parties, des deuxième et troisième couches, constituées du troisième mélange sont de préférence axialement le plus proche du plan médian circonférentiel pour assurer le contact le plus efficace possible avec le sol. La partie de la bande de roulement du pneumatique correspondant au plan médian circonférentiel fait en effet partie de la zone d'écrasement la plus importante du pneumatique en roulage et qui offre assurément un contact avec le sol. De préférence encore, une partie constituée du troisième mélange est centrée sur le plan médian circonférentiel et lorsque le nombre de parties constituées du troisième mélange élastomérique est supérieur ou égal à trois, lesdites parties sont réparties symétriquement autour de ce plan médian circonférentiel.

Selon cette première variante de réalisation de l'invention, ladite troisième couche de mélanges élastomériques comporte un nombre pair de parties constituées du deuxième mélange élastomérique.

Avantageusement encore, les parties constituées du deuxième mélange élastomérique de la troisième couche séparent axialement deux parties constituées du quatrième mélange élastomérique et/ou deux parties constituées du troisième mélange élastomérique et/ou une partie constituée du troisième mélange élastomérique d'une partie constituée du quatrième mélange élastomérique.

Selon une deuxième variante de l'invention, la sculpture comportant un nombre impair de rainures circonférentielles, ladite deuxième couche de mélanges élastomériques est constituée d'au moins cinq parties, et ladite deuxième couche comporte un nombre pair de parties constituées du troisième mélange élastomérique.

Comme dans le cas de la première variante, selon cette deuxième variante de réalisation de l'invention, les chemins de conduction constitués par le premier mélange élastomérique et le troisième mélange élastomérique depuis l'armature de sommet au travers des trois couches sont avantageusement positionnés entre les rainures de sorte que ce chemin arrive assurément jusqu'à la surface de la bande de roulement venant au contact du sol. Les parties, des deuxième et troisième couches, constituées du troisième mélange sont de préférence axialement le plus proche du plan médian circonférentiel pour assurer le contact le plus efficace possible avec le sol et réparties symétriquement autour de ce plan médian circonférentiel.

Selon cette deuxième variante de réalisation de l'invention, ladite troisième couche de mélanges élastomériques comporte un nombre impair de parties constituées du deuxième mélange élastomérique.

Avantageusement encore, comme dans le cas de la première variante, les parties constituées du deuxième mélange élastomérique de la troisième couche séparent axialement deux parties constituées du quatrième mélange élastomérique et/ou deux parties constituées du troisième mélange élastomérique et/ou une partie constituée du troisième mélange élastomérique d'une partie constituée du quatrième mélange élastomérique.

Selon d'autres variantes de l'invention, la sculpture comportant un nombre pair de rainures circonférentielles, la deuxième couche peut comporter un nombre pair de parties constituées du troisième mélange élastomérique notamment pour satisfaire à des contraintes industrielles. Le positionnement du ou des chemins de conduction constitués par le premier mélange élastomérique et le troisième mélange élastomérique n'est plus alors le plus proche du plan médian circonférentiel. Une répartition symétrique autour de ce plan médian circonférentiel peut être conservée.

Selon d'autres variantes de l'invention, la sculpture comportant un nombre impair de rainures circonférentielles, la deuxième couche peut comporter un nombre impair de parties constituées du troisième mélange élastomérique notamment pour satisfaire à des contraintes industrielles. Une répartition symétrique autour du plan médian circonférentiel peut alors être difficilement conservée.

Selon un mode de réalisation avantageux de l'invention, le troisième mélange élastomérique présent dans les deuxième et troisième couches est identique au premier mélange élastomérique.

Une variante avantageuse de l'invention prévoit encore la présence d'une quatrième couche constituée au moins pour partie du quatrième mélange élastomérique radialement intérieure à la troisième couche et au contact de celle-ci.

La présence de cette quatrième couche peut permettre de diminuer encore les montées en température de la bande de roulement lors de l'usage souhaité du pneumatique.

La présence de cette quatrième couche peut encore permettre de diminuer la température de fonctionnement du pneumatique dans la zone du sommet pour permettre de baisser la résistance au roulement du pneumatique.

Cette quatrième couche étant constituée pour partie du quatrième mélange, elle est avantageusement également interrompue radialement par ledit troisième mélange pour prolonger radialement ladite au moins une partie de ladite troisième couche constituée du troisième mélange élastomérique. Selon une telle réalisation de l'invention, la bande de roulement comporte ainsi, autour du plan équatorial, une zone de conductivité électrique depuis l'armature se sommet jusque la surface de la bande de roulement.

Avantageusement selon l'invention, le rapport du volume du premier mélange élastomérique sur la somme des volumes des quatre mélanges élastomériques est compris entre 25 et 70 %.

Avantageusement selon l'invention, le rapport du volume du troisième mélange élastomérique sur la somme des volumes des quatre mélanges élastomériques est compris entre 5 et 10 %.

Avantageusement encore, le rapport du volume du deuxième mélange élastomérique sur la somme des volumes des quatre mélanges élastomériques est compris entre 10 et 40 %.

Avantageusement également, le rapport du volume du quatrième mélange élastomérique sur la somme des volumes des quatre mélanges élastomériques est inférieur à 25 %.

Selon l'invention, les mesures de volumes précitées sont réalisées sur des pneumatiques à l'état neuf, n'ayant pas roulés et donc ne présentant aucune usure de la bande de roulement.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures 1 à 4 qui représentent :
- figure1, une vue méridienne d'un schéma d'un pneumatique selon un premier mode de réalisation de l'invention,
- figure 2, une vue méridienne d'un schéma d'une bande de roulement du pneumatique selon un premier mode de réalisation de l'invention,
- figure 3, une vue méridienne d'un schéma d'une bande de roulement du pneumatique selon un deuxième mode de réalisation de l'invention,
- figure 4, une vue méridienne d'un schéma d'une bande de roulement du pneumatique selon un troisième mode de réalisation de l'invention.

Les figures ne sont pas représentées à l'échelle pour en simplifier la compréhension.

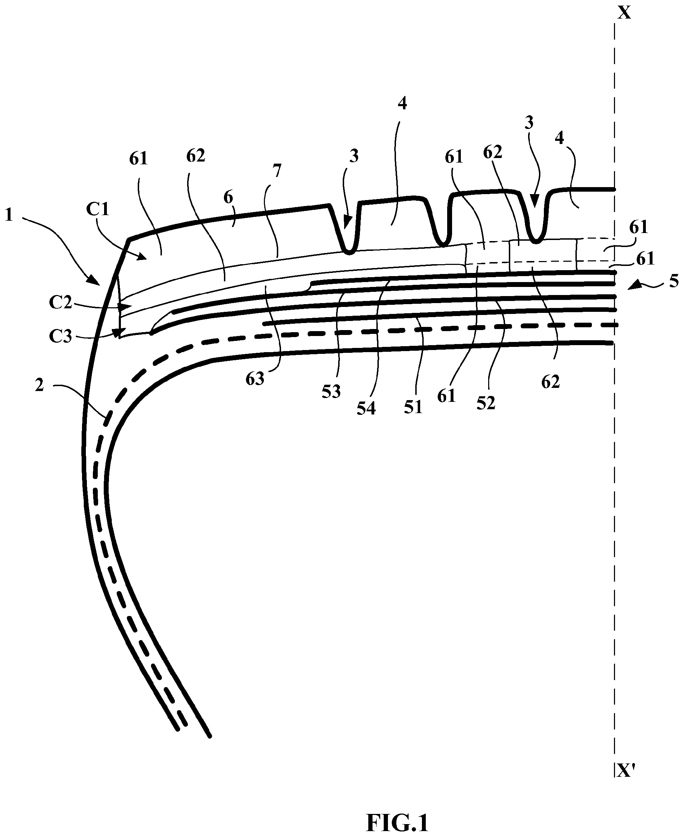

La figure 1 ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 275/70 R 22.5, comprend une armature de carcasse radiale 2 ancrée dans deux bourrelets, autour de tringles, non représentées sur les figures. L'armature de carcasse 2 est formée d'une seule couche de câbles métalliques. L'armature de carcasse 2 est frettée par une armature de sommet 5, elle-même coiffée d'une bande de roulement 6. La bande de roulement comporte des rainures 3 formant des ribs 4.

Les zones basses et bourrelets du pneumatique 1 ne sont notamment pas représentés sur les figures.

Sur la figure 1, l'armature de sommet 5 est formée radialement de l'intérieur à l'extérieur :
- d'une couche de triangulation 51 formée de câbles métalliques inextensibles 9.28 non frettés, continus sur toute la largeur de la nappe, orientés d'un angle égal à 65°,
- d'une première couche de travail 52 formée de câbles métalliques inextensibles 11.35 non frettés, continus sur toute la largeur de la nappe, orientés d'un angle égal à 26°,
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,
- d'une couche de protection 54 formée de câbles métalliques élastiques 18.23 non frettés, continus sur toute la largeur de la nappe, orientés d'un angle égal à 18° dans le même sens que les câbles métalliques de la couche de travail 53.

Conformément à l'invention, la bande de roulement 6 est constituée d'une première couche C1, constituée d'un premier mélange élastomérique 61, radialement extérieure qui vient au contact du sol, d'une deuxième couche C2, radialement au contact de la première couche, constituée du premier mélange 61 et d'un deuxième mélange élastomérique 62, et d'une troisième couche C3, radialement la plus intérieure, formée D'une combinaison du premier mélange 61, du deuxième mélange 62 et du quatrième mélange 63.

Conformément à l'invention le premier mélange élastomérique 61 présente une résistivité électrique volumique telle que log(ρ₁) est égal à 3 et donc inférieure à 6.

Le deuxième mélange élastomérique 62, formant au moins les parties axialement extérieures de la couche C2, présente une résistivité électrique volumique telle que log(ρ₂) est égal à 10 et donc supérieur à 8.

Le quatrième mélange élastomérique 63, formant au moins les parties axialement extérieures de la couche C3, présente une valeur maximale de tan(δ), noté tan(δ)max, égale à 0.045 et donc inférieure à 0.080.

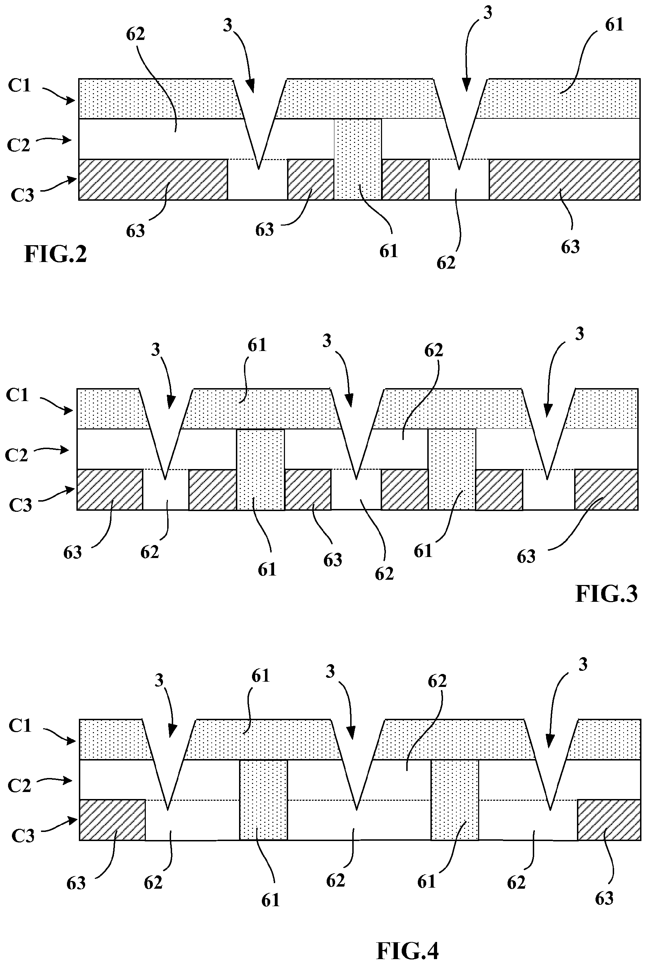

La figure 2 illustre de manière très schématique une vue méridienne partielle de la bande de roulement 6 d'un pneumatique 1 selon un premier mode de réalisation de l'invention.

Selon ce premier mode de réalisation de l'invention, la bande de roulement comporte deux rainures circonférentielles 3, formant ainsi trois ribs 4.

La couche C2 comporte une partie formée du premier mélange élastomérique 61 et deux parties formées du deuxième mélange élastomérique 62. La partie formée du premier mélange élastomérique 61 est centrée sur le plan médian circonférentiel du pneumatique.

La couche C3 comporte une partie formée du premier mélange élastomérique 61 prolongeant radialement la partie de la couche C2 formée du même mélange 61 ; ces deux parties constituées du mélange élastomérique 61 forment ainsi un chemin de conductivité depuis l'armature de renforcement jusque la surface de la bande roulement.

La couche C3 comporte deux parties formées du deuxième mélange élastomérique 62, lesdites parties étant centrées respectivement sur des plans circonférentiels passant par chacune des rainures 3.

La couche C3 comporte encore quatre parties formées du quatrième mélange 63 axialement au contact de part et d'autre des parties formées du mélange 62.

Le rapport du volume du premier mélange élastomérique 61 sur la somme des volumes des trois mélanges 61, 62 et 63 est égal à 64 %.

Le rapport du volume du deuxième mélange élastomérique 62 sur la somme des volumes des trois mélanges 61, 62 et 63 est égal à 19 %.

Le rapport du volume du quatrième mélange élastomérique 63 sur la somme des volumes des trois mélanges 61, 62 et 63 est égal à 17 %.

La figure 3 illustre de manière très schématique une vue méridienne partielle de la bande de roulement 6 d'un pneumatique 1 selon un deuxième mode de réalisation de l'invention.

Selon ce deuxième mode de réalisation de l'invention, la bande de roulement comporte trois rainures circonférentielles 3, formant ainsi quatre ribs 4.

La couche C2 comporte deux parties formées du premier mélange élastomérique 61 et trois parties formées du deuxième mélange élastomérique 62. Les deux parties formées du premier mélange élastomérique 61 sont réparties axialement de part et d'autre de la rainure 3 centrée sur le plan médian circonférentiel du pneumatique. Le chemin de conductivité électrique constitué par les parties formées du premier mélange élastomérique 61 est ainsi centré sur un plan circonférentiel ne passant pas par une rainure 3 et optimise ainsi la surface de conduction avec le sol.

La couche C3 comporte deux parties formées du premier mélange élastomérique 61 prolongeant radialement les deux parties de la couche C2 formées du même mélange 61 ; ces parties constituées du mélange élastomérique 61 forment ainsi un chemin de conductivité depuis l'armature de renforcement jusque la surface de la bande roulement.

La couche C3 comporte trois parties formées du deuxième mélange élastomérique 62, lesdites parties étant centrées respectivement sur des plans circonférentiels passant par chacune des rainures 3.

La couche C3 comporte encore six parties formées du quatrième mélange 63 axialement au contact de part et d'autre des parties formées du mélange 62.

Le rapport du volume du premier mélange élastomérique 61 sur la somme des volumes des trois mélanges 61, 62 et 63 est égal à 68 %.

Le rapport du volume du deuxième mélange élastomérique 62 sur la somme des volumes des trois mélanges 61, 62 et 63 est égal à 19 %.

Le rapport du volume du troisième mélange élastomérique 63 sur la somme des volumes des trois mélanges 61, 62 et 63 est égal à 13 %.

La figure 4 illustre de manière très schématique une vue méridienne partielle de la bande de roulement 6 d'un pneumatique 1 selon un troisième mode de réalisation de l'invention. Il s'agit en fait d'une variante de réalisation du deuxième mode de réalisation illustré sur la figure 3.

Selon ce troisième mode de réalisation de l'invention, la bande de roulement comporte également trois rainures circonférentielles 3, et seule la troisième couche C3 est différente.

La couche C3 comporte seulement deux parties formées du quatrième mélange élastomérique 63 formant les parties axialement extérieures de la troisième couche.

Le rapport du volume du premier mélange élastomérique 61 sur la somme des volumes des trois mélanges 61, 62 et 63 est égal à 68 %.

Le rapport du volume du deuxième mélange élastomérique 62 sur la somme des volumes des trois mélanges 61, 62 et 63 est égal à 25 %.

Le rapport du volume du troisième mélange élastomérique 63 sur la somme des volumes des trois mélanges 61, 62 et 63 est égal à 7 %.

Comparé au pneumatique illustré sur la figure 3, le pneumatique de la figure 4 est moins performant en termes de résistance au roulement.

Deux pneumatiques ont été réalisés sur la base des trois mélanges élastomériques décrits ci-dessous avec certaines de leurs propriétés.

| | Mélange A | Mélange B | Mélange C |
|---|---|---|---|
| NR | 80 | 100 | 100 |
| BR | 20 | | |
| N234 | 48 | | |
| N683 | | | 35 |
| Silice 165 m2/G | | 50 | 10 |
| N330 / Agent de couplage | | 5/5 | 1/1 |
| Agent de recouvrement | | | |
| Anti Oxydant | 3 | 2.5 | 1 |
| PARAFFINE | 1 | 1 | |
| ACIDE STEARIQUE | 2 | 2.5 | 1.5 |
| ZNO | 3 | 3 | 4.5 |
| SOUFRE | 1.5 | 1.5 | 1.5 |
| Accélérateur (CBS) | 0.9 | 1.8 | 1.4 |
| tan(δ)ₘₐₓ | 0.135 | 0.080 | 0.045 |
| Résistivité log(p) | 3.8 | 10.4 | 10 |

Le premier pneumatique est un pneumatique de référence R réalisé selon une configuration correspondant à des réalisations usuelles telles que décrites précédemment constituées de deux couches radialement superposées, la couche radialement intérieure étant formée d'un seul mélange élastomérique. Il associe un mélange A présent radialement à l'extérieur de la bande de roulement et un mélange C radialement intérieur. Le volume du mélange C est défini usuellement par l'homme du métier pour que la température de fonctionnement du pneumatique corresponde au roulage envisagé avec un tel pneumatique. Dans le cas présent, le volume du mélange C représente 17 % de la somme des volumes des mélanges A et C.

Le deuxième pneumatique T conforme à l'invention et plus particulièrement au cas des figures 1 et 3 associe, pour former la bande de roulement, le mélange A qui qui correspond au mélange 61, le mélange B, qui correspond au mélange 62 et le mélange C qui correspond au mélange 63.

Pour effectuer une comparaison, des essais similaires sont effectués avec les trois pneumatiques.

Les premiers essais ont consisté à évaluer la distance parcourue par les pneumatiques avant d'effectuer un rechapage.

Les essais sont réalisés dans des conditions de charge et vitesse définis pour conduire à une usure et à des agressions de la bande de roulement du pneumatique de référence R autorisant son rechapage après un kilométrage, auquel on attribue la valeur 100, parcouru dans lesdites conditions de ce test. La performance en usure est évaluée sur un véhicule poids lourd lors de roulages sur route ouverte sur des parcours représentatifs des usages classiquement observés sur des véhicules poids lourd. Des valeurs inférieures à 100 expriment une performance en usure inférieure.

Les résultats obtenus sont présentés dans le tableau suivant :

| | Pneumatique R | Pneumatique T |
|---|---|---|
| Usure | 100 | 95 |

Ces résultats montrent que le pneumatique selon l'invention autorise un roulage sensiblement équivalent à celui parcouru par le pneumatique de référence avant d'effectuer un rechapage.

Des mesures de résistance au roulement ont également été effectuées sur chacun des pneumatiques dans des conditions de roulage identiques. Les résultats des mesures sont présentés dans le tableau suivant ; elles sont exprimées en Kg/t, une valeur de 100 étant attribuée au pneumatique R. Des valeurs inférieures à 100 expriment une performance en résistance au roulement supérieure.

| Pneumatique R | Pneumatique T |
|---|---|
| 100 | 90 |

Ces résultats montrent que le pneumatique selon l'invention présente des performances en termes de résistance au roulement supérieure au pneumatique de référence.

Ces résultats montrent que l'association de trois couches pour former la bande de roulement permet par exemple de décaler le compromis entre les performances d'usure et de résistance au roulement.

Par ailleurs, conformément à l'invention, la présence des chemins de conductivité électrique au travers des couches radialement les plus intérieures permet d'assurer l'évacuation des charges électrostatiques, de manière plus efficace que dans le pneumatique de référence.

## Revendications

1. Pneumatique (1), à armature de carcasse radiale (2), comprenant une armature de sommet (5), elle-même coiffée radialement d'une bande de roulement (6), dont la sculpture comporte au moins deux rainures circonférentielles (3), réunie à deux bourrelets par l'intermédiaire de deux flancs, ladite bande de roulement (6) étant constituée d'au moins trois couches (C1, C2, C3) de mélanges élastomériques radialement superposées, **caractérisé en ce qu'**une première couche (C1) formant la partie radialement extérieure de la bande de roulement est constituée d'au moins un premier mélange élastomérique (61) présentant une résistivité électrique volumique ρ₁ telle que log(ρ₁) est inférieur à 6, **en ce qu'**une deuxième couche (C2) de mélanges élastomériques radialement intérieure et au contact de la dite première couche (C1) de mélange élastomérique est constituée d'au moins trois parties, **en ce qu'**au moins les parties axialement extérieures, de ladite deuxième couche (C2), sont constituées d'un deuxième mélange élastomérique (62) présentant une résistivité électrique volumique ρ₂ telle que log(ρ₂) est supérieur à 10, **en ce qu'**au moins une partie de ladite deuxième couche, prolongeant radialement ledit au moins premier mélange élastomérique de ladite première couche, est constituée d'un troisième mélange élastomérique présentant une résistivité électrique volumique ρ₃ telle que log(ρ₃) est inférieur à 6, **en ce qu'**une troisième couche (C3) de mélanges élastomériques radialement la plus intérieure est constituée d'au moins cinq parties, **en ce qu'**au moins les parties axialement extérieures, de ladite troisième couche (C3), sont constituées d'un quatrième mélange élastomérique (63) présentant une valeur maximale de tan(δ), noté tan(δ)max, inférieure à 0.080, **en ce qu'**au moins deux parties de ladite troisième couche (C3), axialement au contact d'au moins une partie axialement extérieure sont constituées du deuxième mélange élastomérique (62), et **en ce qu'**au moins une partie, de ladite troisième couche (C3), prolongeant radialement ladite au moins une partie de ladite deuxième couche (C2) constituée du troisième mélange élastomérique, est constituée dudit troisième mélange élastomérique.

2. Pneumatique (1) selon la revendication 1, **caractérisé en ce que** la distance entre un point de la paroi formant une rainure (3) et le quatrième mélange élastomérique (63) est supérieure à 1 mm.

3. Pneumatique (1) selon l'une des revendications 1 ou 2, **caractérisé en ce que** lesdites au moins deux parties de ladite troisième couche (C3) constituées du deuxième mélange élastomérique sont axialement centrées sur un plan circonférentiel passant par une desdites au moins deux rainures circonférentielles.

4. Pneumatique (1) selon l'une des revendications 1 à 3, la sculpture comportant un nombre pair de rainures circonférentielles (3), **caractérisé en ce que** ladite deuxième couche (C2) comporte un nombre impair de parties constituées du troisième mélange élastomérique.

5. Pneumatique (1) selon la revendication 4, **caractérisé en ce que** ladite troisième couche (C3) de mélanges élastomériques comporte un nombre pair de parties constituées du deuxième mélange élastomérique (62).

6. Pneumatique (1) selon l'une des revendications 1 à 3, la sculpture comportant un nombre impair de rainures circonférentielles (3), **caractérisé en ce que** ladite deuxième couche (C2) de mélanges élastomériques est constituée d'au moins cinq parties, et **en ce que** ladite deuxième couche (C2) comporte un nombre pair de parties constituées du troisième mélange élastomérique.

7. Pneumatique (1) selon la revendication 6, **caractérisé en ce que** ladite troisième couche (C3) de mélanges élastomériques comporte un nombre impair de parties constituées du deuxième mélange élastomérique (62).

8. Pneumatique (1) selon l'une des revendications 1 à 7, **caractérisé en ce que** le rapport du volume du premier mélange élastomérique (61) sur la somme des volumes des quatre mélanges élastomériques est compris entre 25 et 70 %.

9. Pneumatique (1) selon l'une des revendications 1 à 8, **caractérisé en ce que** le rapport du volume du troisième mélange élastomérique sur la somme des volumes des quatre mélanges élastomériques est compris entre 5 et 10 %.

10. Pneumatique (1) selon l'une des revendications 1 à 9, **caractérisé en ce que** le rapport du volume du deuxième mélange élastomérique (62) sur la somme des volumes des quatre mélanges élastomériques est compris entre 10 et 40 %.

11. Pneumatique (1) selon l'une des revendications 1 à 10, **caractérisé en ce que** le rapport du volume du quatrième mélange élastomérique sur la somme des volumes des quatre mélanges élastomériques est inférieur à 25 %.

12. Pneumatique selon l'une des revendications précédentes, **caractérisé en ce que** le troisième mélange élastomérique présent dans les deuxième et troisième couches (C2, C3) est identique au premier mélange élastomérique (61).

## Patentansprüche

1. Reifen (1) mit radialer Karkassenbewehrung (2), der eine Scheitelbewehrung (5) umfasst, die ihrerseits radial von einem Laufstreifen (6) überlagert wird, dessen Profil wenigstens zwei Umfangsrillen (3) aufweist und der über zwei Seitenwände mit zwei Wülsten verbunden ist, wobei der Laufstreifen (6) aus wenigstens drei radial übereinanderliegenden Schichten (C1, C2, C3) aus Elastomermischungen besteht, **dadurch gekennzeichnet, dass** eine erste Schicht (C1), die den radial äußeren Teil des Laufstreifens bildet, aus wenigstens einer ersten Elastomermischung (61) besteht, die einen solchen spezifischen elektrischen Volumenwiderstand ρ₁ aufweist, dass log(ρ₁) kleiner als 6 ist, dadurch, dass eine zweite Schicht (C2) aus Elastomermischungen, die sich radial innerhalb und in Kontakt mit der ersten Schicht (C1) aus Elastomermischung befindet, aus wenigstens drei Teilen besteht, dadurch, dass wenigstens die axial äußeren Teile der zweiten Schicht (C2) aus einer zweiten Elastomermischung (62) bestehen, die einen solchen spezifischen elektrischen Volumenwiderstand ρ₂ aufweist, dass log(ρ₂) größer als 10 ist, dadurch, dass wenigstens ein Teil der zweiten Schicht, der die wenigstens eine erste Elastomermischung der ersten Schicht radial verlängert, aus einer dritten Elastomermischung besteht, die einen solchen spezifischen elektrischen Volumenwiderstand ρ₃ aufweist, dass log(ρ₃) kleiner als 6 ist, dadurch, dass eine dritte, radial innerste Schicht (C3) aus Elastomermischungen aus wenigstens fünf Teilen besteht, dadurch, dass wenigstens die axial äußeren Teile der dritten Schicht (C3) aus einer vierten Elastomermischung (63) bestehen, die einen maximalen Wert von tan(δ), mit tan(δ)max bezeichnet, aufweist, der kleiner als 0,080 ist, dadurch, dass wenigstens zwei Teile der dritten Schicht (C3), die sich axial in Kontakt mit wenigstens einem axial äußeren Teil befinden, aus der zweiten Elastomermischung (62) bestehen, und dadurch, dass wenigstens ein Teil der dritten Schicht (C3), der den wenigstens einen Teil der zweiten Schicht (C2), der aus der dritten Elastomermischung besteht, radial verlängert, aus der dritten Elastomermischung besteht.

2. Reifen (1) nach Anspruch 1, **dadurch gekennzeichnet, dass** der Abstand zwischen einem Punkt der Wand, die eine Rille (3) bildet, und der vierten Elastomermischung (63) größer als 1 mm ist.

3. Reifen (1) nach einem der Ansprüche 1 oder 2, **dadurch gekennzeichnet, dass** die wenigstens zwei Teile der dritten Schicht (C3), die aus der zweiten Elastomermischung bestehen, axial auf einer Umfangsebene zentriert sind, die durch eine der wenigstens zwei Umfangsrillen verläuft.

4. Reifen (1) nach einem der Ansprüche 1 bis 3, wobei das Profil eine gerade Anzahl von Umfangsrillen (3) aufweist, **dadurch gekennzeichnet, dass** die zweite Schicht (C2) eine ungerade Anzahl von Teilen aufweist, die aus der dritten Elastomermischung bestehen.

5. Reifen (1) nach Anspruch 4, **dadurch gekennzeichnet, dass** die dritte Schicht (C3) aus Elastomermischungen eine gerade Anzahl von Teilen aufweist, die aus der zweiten Elastomermischung (62) bestehen.

6. Reifen (1) nach einem der Ansprüche 1 bis 3, wobei das Profil eine ungerade Anzahl von Umfangsrillen (3) aufweist, **dadurch gekennzeichnet, dass** die zweite Schicht (C2) aus Elastomermischungen aus wenigstens fünf Teilen besteht, und dadurch, dass die zweite Schicht (C2) eine gerade Anzahl von Teilen aufweist, die aus der dritten Elastomermischung bestehen.

7. Reifen (1) nach Anspruch 6, **dadurch gekennzeichnet, dass** die dritte Schicht (C3) aus Elastomermischungen eine ungerade Anzahl von Teilen aufweist, die aus der zweiten Elastomermischung (62) bestehen.

8. Reifen (1) nach einem der Ansprüche 1 bis 7, **dadurch gekennzeichnet, dass** das Verhältnis des Volumens der ersten Elastomermischung (61) zur Summe der Volumina der vier Elastomermischungen zwischen 25 und 70 % liegt.

9. Reifen (1) nach einem der Ansprüche 1 bis 8, **dadurch gekennzeichnet, dass** das Verhältnis des Volumens der dritten Elastomermischung zur Summe der Volumina der vier Elastomermischungen zwischen 5 und 10 % liegt.

10. Reifen (1) nach einem der Ansprüche 1 bis 9, **dadurch gekennzeichnet, dass** das Verhältnis des Volumens der zweiten Elastomermischung (62) zur Summe der Volumina der vier Elastomermischungen zwischen 10 und 40 % liegt.

11. Reifen (1) nach einem der Ansprüche 1 bis 10, **dadurch gekennzeichnet, dass** das Verhältnis des Volumens der vierten Elastomermischung zur Summe der Volumina der vier Elastomermischungen kleiner als 25 % ist.

12. Reifen nach einem der vorhergehenden Ansprüche, **dadurch gekennzeichnet, dass** die dritte Elastomermischung, die in der zweiten und der dritten Schicht (C2, C3) vorhanden ist, mit der ersten Elastomermischung (61) identisch ist.

## Claims

1. Tyre (1) with radial carcass reinforcement (2) comprising a crown reinforcement (5) itself capped radially with a tread (6) of which the tread pattern comprises at least two circumferential grooves (3), which is connected to two beads via two sidewalls, the said tread (6) being made up of at least three layers (C1, C2, C3) of elastomeric compounds which are radially superposed, **characterized in that** a first layer (C1) forming the radially outer part of the tread is made up of at least one first elastomeric compound (61) having an electrical resistivity per unit volume ρ₁ such that log(ρ₁) is less than 6, **in that** a second layer (C2) of elastomeric compounds radially on the inside of and in contact with the said first layer (C1) of elastomeric compound is made up of at least three parts, **in that** at least the axially outer parts of the said second layer (C2) are made up of a second elastomeric compound (62) having an electrical resistivity per unit volume ρ₂ such that log(ρ₂) is greater than 10, **in that** at least part of the said second layer, radially extending the said at least first elastomeric compound of the said first layer, is made up of a third elastomeric compound having an electrical resistivity per unit volume ρ₃ such that log(ρ₃) is less than 6, **in that** a third layer (C3) of elastomeric compounds radially furthest towards the inside is made up of at least five parts, **in that** at least the axially outer parts of the said third layer (C3) are made up of a fourth elastomeric compound (63) having a maximum value of tan(δ), denoted tan(δ)max, of less than 0.080, **in that** at least two parts of the said third layer (C3) axially in contact with at least one axially outer part are made up of the second elastomeric compound (62), and **in that** at least part of the said third layer (C3), that radially extends the said at least one part of the said second layer (C2) made up of the third elastomeric compound, is made up of the said third elastomeric compound.

2. Tyre (1) according to Claim 1, **characterized in that** the distance between a point on the wall forming a groove (3) and the fourth elastomeric compound (63) is greater than 1 mm.

3. Tyre (1) according to one of Claims 1 and 2, **characterized in that** the said at least two parts of the said third layer (C3) that are made up of the second elastomeric compound are axially centred on a circumferential plane passing through one of the said at least two circumferential grooves.

4. Tyre (1) according to one of Claims 1 to 3, the tread pattern comprising an even number of circumferential grooves (3), **characterized in that** the said second layer (C2) comprises an odd number of parts made up of the third elastomeric compound.

5. Tyre (1) according to Claim 4, **characterized in that** the said third layer (C3) of elastomeric compounds comprises an even number of parts made up of the second elastomeric compound (62).

6. Tyre (1) according to one of Claims 1 to 3, the tread pattern comprising an odd number of circumferential grooves (3), **characterized in that** the said second layer (C2) of elastomeric compounds is made up of at least five parts, and **in that** the said second layer (C2) comprises an even number of parts made up of the third elastomeric compound.

7. Tyre (1) according to Claim 6, **characterized in that** the said third layer (C3) of elastomeric compounds comprises an odd number of parts made up of the second elastomeric compound (62).

8. Tyre (1) according to one of Claims 1 to 7, **characterized in that** the ratio of the volume of the first elastomeric compound (61) to the sum of the volumes of the four elastomeric compounds is between 25 and 70%.

9. Tyre (1) according to one of Claims 1 to 8, **characterized in that** the ratio of the volume of the third elastomeric compound to the sum of the volumes of the four elastomeric compounds is between 5 and 10%.

10. Tyre (1) according to one of Claims 1 to 9, **characterized in that** the ratio of the volume of the second elastomeric compound (62) to the sum of the volumes of the four elastomeric compounds is between 10 and 40%.

11. Tyre (1) according to one of Claims 1 to 10, **characterized in that** the ratio of the volume of the fourth elastomeric compound to the sum of the volumes of the four elastomeric compounds is less than 25%.

12. Tyre according to one of the preceding claims, **characterized in that** the third elastomeric compound present in the second and third layers (C2, C3) is identical to the first elastomeric compound (61).
